# EUROPEAN PATENT SPECIFICATION

(11) **EP 3 944 365 B1**
(45) Date of publication and mention of the grant of the patent: **19.04.2023**
(21) Application number: 20930647.1
(22) Date of filing: 23.04.2020
(51) Int. Cl.: H01M 4/13, H01M 4/04, H01M 4/134, H01M 4/38, H01M 4/62, H01M 10/052, H01M 10/056, H01M 10/0562, H01M 10/0565, H01M 10/42, H01M 4/02

(54) **LITHIUM METAL BATTERY AND PREPARATION METHOD THEREFOR, AND APPARATUS COMPRISING LITHIUM METAL BATTERY AND NEGATIVE ELECTRODE PLATE**
LITHIUM-METALL-BATTERIE UND VERFAHREN ZU IHRER HERSTELLUNG SOWIE EINE VORRICHTUNG MIT EINER LITHIUM-METALL-BATTERIE UND EINER NEGATIVEN ELEKTRODENPLATTE
BATTERIE AU LITHIUM-MÉTAL ET SON PROCÉDÉ DE PRÉPARATION, ET APPAREIL COMPRENANT UNE BATTERIE AU LITHIUM-MÉTAL ET UNE PLAQUE D'ÉLECTRODE NÉGATIVE

(43) Date of publication of application: 26.01.2022
(73) Proprietor: Contemporary Amperex Technology Co., Limited, Jiaocheng District Ningde City, Fujian 352100 (CN)
(72) Inventor: LI, Qian, Ningde, Fujian 352100 (CN); LIU, Chengyong, Ningde, Fujian 352100 (CN); GUO, Yongsheng, Ningde, Fujian 352100 (CN); FU, Jiawei, Ningde, Fujian 352100 (CN); HU, Bobing, Ningde Fujian 352100 (CN); CHENG, Meng, Ningde, Fujian 352100 (CN)
(74) Representative: Boult Wade Tennant LLP
(86) International application number: PCT/CN2020/086473
(87) International publication number: WO 2021/212428

(56) References cited:
- CN-A- 109 817 893
- CN-A- 110 651 384
- JP-B2- 5 106 732
- US-A1- 2018 301 693
- US-B2- 10 347 904

## Description

### TECHNICAL FIELD

This application belongs to the technical field of secondary batteries, and specifically relates to a lithium metal battery, a process for preparing the same, an apparatus containing the lithium metal battery, and a negative electrode plate.

### BACKGROUND

Secondary batteries mainly rely on reciprocating movement of active ions between a positive electrode and a negative electrode for reversible charging and discharging. They are widely used because of their advantages of reliable working performance, no pollution, no memory effect, and the like.

As the application range of secondary batteries becomes wider and wider, higher energy density are required. Lithium metal has its advantages of extremely high theoretical specific capacity (3860 mAh/g), lowest reduction potential (-3.04V vs standard hydrogen electrode), and low density (0.534 g/cm³), so it is expected to become a preferred negative electrode active material for the next generation of secondary batteries with high energy density. However, in the actual research, it is found that the application of lithium metal negative electrode is difficult to achieve wide application due to many difficulties.

US2018/301693 A1 discloses a negative electrode for a lithium secondary battery having a double protective layer formed therein, and in particular, to a negative electrode for a lithium secondary battery having a polymer protective layer and a carbon-based protective layer formed therein, and a lithium secondary battery including the same.

JP5106732 B2 discloses an electrochemical battery comprising a negative electrode comprising a first negative active layer comprising metal lithium and a multi-layer structure that is in direct contact with the surface of the first negative active layer, the multi-layer structure comprising three or more layers, and each of the three or more layers comprising a mono-ionic conductive layer or a polymer layer.

US10347904 B2 discloses a lithium metal anode includes a lithium metal layer and a multi-layer polymer coating disposed over the lithium metal layer. The multi-layer polymer coating includes a first outer polymeric crosslinked gel layer positioned for contact with battery electrolyte and a second inner polymer layer disposed between the lithium metal layer and the first outer polymeric crosslinked gel layer.

### SUMMARY OF THE INVENTION

The inventors found that due to the fact that the metal lithium is soft and would be prone to produce various defects and even breakage in the continuous deposition and peeling during the battery cycling, metal lithium usually would be combined with a copper foil to form a metal current collector as a negative electrode plate. Nevertheless, irregular deposition of lithium ions on the surface of the lithium metal negative electrode is likely to cause uncontrollable growth of lithium dendrites. Lithium dendrites would readily cause internal short circuits in batteries and bring about safety risks. In addition, the weight of the metal current collector is relatively high, and thus would adversely affect the exertion of metal lithium in improving the energy density of batteries.

The inventors conducted a lot of researches and aimed to provide a negative electrode plate with reduced weight and the capability of improving safety performance of lithium metal batteries, so as to obtain the lithium metal batteries with higher weight energy density and better safety performance.

The invention is set out in the appended claims.

Surprisingly, it was found that by directly bonding a lithium-based metal layer to a polymer material base layer in the present application, not only can the polymer material base layer have a good support and protection effect on the lithium-based metal layer, but also the polymer material base layer can reduce the weight of the negative electrode plate, and also reduce the risk of internal short-circuit in the battery, or increase short-circuit resistance or cut off conductive path when the battery is short-circuited, thereby improving the weight energy density and safety performance of the lithium metal battery. More preferably, the battery can also have a higher cycle performance. The apparatus of the present application comprises the lithium metal battery provided in the present application, and therefore has at least the same advantages as the lithium metal battery.

### DESCRIPTION OF THE DRAWINGS

In order to explain the technical solutions of the embodiments of the present application more clearly, the drawings for embodiments of the present application will be briefly described below. The drawings described below are only some embodiments of the present application. A person skilled in the art can obtain other drawings based on the drawings without a creative work.
Fig. 1 shows a schematic diagram of a negative electrode plate provided in one embodiment of the present application.
Fig. 2 shows a schematic diagram of a lithium metal battery provided in one embodiment of the present application.
Fig. 3 is an exploded view of Fig. 2.
Fig. 4 is a schematic diagram of a battery module provided in one embodiment of the present application.
Fig. 5 is a schematic diagram of a battery pack provided in one embodiment of the present application.
Fig. 6 is an exploded view of Fig. 5.
Fig. 7 is a schematic diagram of an apparatus provided in one embodiment of the present application in which the lithium metal battery is used as a power source.

In the drawings, the reference numerals are given as follows: 1- battery pack; 2- upper case body; 3-lower case body; 4-battery module; 5-lithium metal battery; 51-shell; 52-electrode assembly, 53-cover plate, 10-polymer material base layer and 20-lithium-based metal layer.

### DETAILED DESCRIPTION

In order to explain the object, technical solution, and technical effects of the present application apparent more clearly, hereinbelow the present application will be further described in detail with reference to the embodiments. It should be understood that the embodiments described in the present description are only for explaining the present application, and are not intended to limit the present application.

For the sake of brevity, only certain numerical ranges are explicitly disclosed herein. However, any lower limit may be combined with any upper limit to form a range that is not explicitly described; and any lower limit may be combined with other lower limits to form range that is not explicitly described. Likewise, any upper limit may be combined with any other upper limit to form a range that is not explicitly described. Further, although not explicitly specified, each point or single value between the endpoints of the range is included in the range. Thus, each point or single value, as its own lower limit or upper limit, can be combined with any other point or single value or combined with other lower limit or upper limit to form a range that is not explicitly specified.

In the description herein, it should be noted that, unless otherwise stated, the recitation of numerical ranges by "no less than" and "no more than" include all numbers within that range including the endpoints. As used herein, the recitation of "more" in the phrase "one or more" means two or more.

The above-stated summary of the present application is not intended to describe each and every embodiment or implementation disclosed in this application. The following description illustrates exemplary embodiments more specifically. In many places throughout the application, guidance is provided by means of a series of embodiments, which can be applied in various combinations. In each instance, the enumeration is only a representative group and should not be interpreted as exhaustive.

### Lithium Metal Battery

According to embodiments of the present application, a lithium metal battery is provided, which can have higher energy density and better safety performance. The lithium metal battery comprises a positive electrode plate, a negative electrode plate and an electrolyte. During the charging and discharging process of the battery, lithium ions are intercalated and deintercalated back and forth between the positive electrode plate and the negative electrode plate. The electrolyte serves to conduct ions between the positive electrode plate and the negative electrode plate.

### [Negative electrode plate]

The negative electrode plate comprises a polymer material base layer and a lithium-based metal layer that is directly bonded to both surface of the polymer material base layer. The lithium-based metal layer not only serves as a negative electrode active material layer that can deintercalate/intercalate lithium ions, but also functions as a conductor and a current collector.

The above-mentioned "directly bonding", "be directly bonded" or similar expression refers to a physical contact bonding between the lithium-based metal layer and the polymer material base layer. The polymer material base layer and the lithium base metal layer form a firm bond through interlayer interaction. The interlayer interaction may include one or more of physical interactions (such as electrostatic force, van der Waals force) and chemical interactions (such as coordination bonds) between polymer materials and metals.

In the negative electrode plate of the present application, the polymer material base layer can serve to support and protect the lithium-based metal layer. In addition, since the density of the polymer material base layer is significantly lower than that of the metal current collector such as copper foil, the weight of the negative electrode plate can be significantly reduced, which is beneficial to increase the weight energy density of the lithium metal battery.

Surprisingly, it is found that by directly bonding the lithium-based metal layer to the polymer material base layer, the safety performance of the battery is also improved. The reasons may be as follows. On the one hand, compared with the composite structure of metal lithium and a metal current collector, directly bonding the lithium-based metal layer to the polymer material base layer would avoid the formation of lithium alloys (lithium aluminum alloys) of metal elements (such as Al) in the metal current collector and lithium, which results in uneven deposition of lithium or uneven deposition caused by deposition orientation of lithium on the different crystal planes of metal (such as the selectivity of lithium metal to Cu (100) and (010) planes). Thus, this can alleviate the problems of lithium dendrite growth or lithium metal pulverization, thereby reducing the risk of internal short circuits in the battery and improving the safety performance of the battery. On the other hand, since the lithium-based metal layer is directly bonded to the polymer material base layer, when an internal short circuit occurs in the battery, the polymer material base layer can melt under the high temperature environment caused by internal short circuit, and the molten polymer material covers the lithium-based metal layer, which thus can increase short-circuit resistance, reduce short-circuit current and reduce short-circuit heat generation, and even cut off conductive path of the internal short-circuit, thereby improving the safety performance of the battery. Alternatively, when an abnormal situation such as nail penetration occurs in the battery, since the elongation and resistivity of the polymer material base layer is larger than that of the lithium-based metal layer, and the lithium-based metal layer is directly bonded to the polymer material base layer, burrs generated by the polymer material base layer can well wrap burrs of the lithium-based metal layer, which can also increase short-circuit resistance, and even cut off local conductive path at the site of nail penetration. In this way, the damage caused by the nail penetration is limited to the site of the nail penetration, forming a Point Break, so that the battery can work normally within a certain period of time.

In some embodiments, the thickness of the polymer material base layer is preferably 3 µm to 20 µm. The polymer material base layer, having a thickness within an appropriate range, can have sufficient mechanical strength, and would not readily break during the processes of processing of electrode plates and of battery cycle, and thus may serve to support and protect the lithium-based metal layer well, thereby improving cycle performance of batteries. The polymer material base layer with an appropriate thickness can better serve to improve the safety performance of the battery. In addition, the use of the negative electrode plate enables the battery to have a lower volume and weight, thereby helping to increase volume energy density and weight energy density of the battery. More preferably, the thickness of the polymer material base layer is from 4 µm to 15 µm. It is particularly preferred to be from 5 µm to 10 µm. For example, the thickness of the polymer material base layer is 6 µm, 7 µm, 8 µm, 9 µm, 10 µm, or 12 µm.

In some embodiments, the tensile strength of the polymer material base layer may be from 2 MPa to 500 MPa, preferably from 50 MPa to 500 MPa, and more preferably from 200 MPa to 500 MPa. The polymer material base layer having high mechanical properties serves to support the lithium-based metal layer, and is not easy to break so as to prevent it from excessively stretching or deforming, thereby effectively preventing the lithium-based metal layer from breaking, and at the same time, rendering a higher bonding strength between the polymer material base layer and the lithium-based metal layer, so that the lithium-based metal layer is not easy to peel off. Therefore, the battery can have a higher cycle performance. For example, the tensile strength of the polymer material base layer is 30 MPa, 100 MPa, 150 MPa, 200 MPa, 250 MPa, 300 MPa, 350 MPa or 400 MPa.

In some embodiments, the puncture resistance strength of the polymer material base layer is ≥0.1 kN/mm, preferably ≥1 kN/mm. More preferably, the puncture resistance strength of the polymer material base layer is from 2 kN/mm to 50 kN/mm, more preferably from 20 kN/mm to 40 kN/mm. The polymer material base layer having high puncture resistance can improve the safety performance of the battery. The polymer material base layer, having a puncture resistance within the above range, can effectively support and protect the lithium-based metal layer while having appropriate flexibility to prevent it from breaking, due to being wound on the electrode plate or subjected to pressure (such as roll pressure, battery's cyclic expansion force, external impact force, and the like), thereby better protecting the lithium-based metal layer. For example, the puncture resistance strength of the polymer material base layer may be 2.5 kN/mm, 5 kN/mm, 10 kN/mm, 15 kN/mm, 25 kN/mm, 30 kN/mm, or 35 kN/mm.

In some embodiments, the elongation at break of the polymer material base layer is ≥0.5%, preferably ≥1%, more preferably ≥1.6%. The polymer material base layer has an appropriate elongation at break, which is not easy to break during the production of the electrode plate and battery cycle, thereby improving cycle performance of the battery. The elongation at break of the polymer material base layer is relatively large. When an abnormal situation such as nail penetration occurs in the battery, burrs generated by the polymer material base layer can well wrap burrs of the lithium-based metal layer, thereby improving the battery's nail penetration safety performance. In particular, burrs of the lithium-based metal layer are forced to expand and separate from main body of the lithium-based metal layer, which can cut off the local conductive path, so that the damage of battery is limited to the site of the nail penetration, forming a Point Break, so that the battery can work normally within a certain period of time. Further, the elongation at break of the polymer material base layer is ≥ 2%, ≥ 3%, ≥ 5%, ≥ 8%, or ≥ 10%.

In some embodiments, a melting point of the polymer material contained in the polymer material base layer is from 100°C to 300°C, preferably from 150°C to 250°C, more preferably from 180°C to 220°C. The polymer material contained in the polymer material base layer, having a melting point within the appropriate range, can not only ensure its heat resistance, so that it can support and protect the lithium-based metal layer during normal operation of the battery, but also make it possible to melt quickly to play a role of melt-protection when thermal runaway and other accidents, caused by internal short circuit, occur in the battery, thereby improving safety performance of the battery.

In some embodiments, a thermal decomposition temperature of the polymer material contained in the polymer material base layer is from 250°C to 550°C, preferably from 300°C to 400°C, more preferably from 330°C to 370°C. The polymer material contained in the polymer material base layer, having a thermal decomposition temperature within the appropriate range, can not only ensure it has heat resistance, which supports and protects the lithium-based metal layer during normal operation of the battery, but also make it possible to produce CO₂, H₂O and other gases to play a role of fire resistance when abnormal conditions, such as thermal runaway or fire, occur in the battery, thereby improving safety performance of the battery.

In some embodiments, the weight average molecular weight of the polymer material contained in the polymer material base layer may be from 10,000 to 2,000,000, further from 50,000 to 2,000,000, and still further from 100,000 to 1,000,000.

In some embodiments, the polymer material base layer may include one or more of polyolefin, polyamide, polyimide, polyester, polycarbonate, and copolymers thereof. Preferably, the polymer material base layer comprises one or more of polyethylene (PE), polypropylene (PP), polystyrene (PS), polyvinyl chloride (PVC), polytetrafluoroethylene (PTFE), polyamide (PA), polyimide (PI), polycarbonate (PC), polyethylene terephthalate (PET), polybutylene terephthalate (PBT), polyethylene naphthalate (PEN), polybutylene naphthalate (PBN), and copolymers of the above substance. More preferably, the polymer material base layer comprises one or more of polypropylene, polystyrene, copolymer of polystyrene and polyethylene, polytetrafluoroethylene, polyethylene terephthalate, polybutylene terephthalate, and copolymers of the above substance. Especially preferably, the polymer material base layer contains one or more of polypropylene, polystyrene, polytetrafluoroethylene, copolymer of polystyrene and polyethylene (PS-PE), and copolymers of the above substances. The selection of appropriate polymer materials for the polymer material base layer is conducive to further improving the safety performance and cycle performance of the battery.

In some embodiments, the thickness of the lithium-based metal layer is from 3 µm to 60 µm, preferably from 3 µm to 40 µm, and more preferably from 3 µm to 20 µm. The thickness of the lithium-based metal layer is within an appropriate range, so that the negative electrode plate contains sufficient active lithium content, and has high electrical conductivity, and during the processing of electrode plate and battery cycle, the lithium-based metal layer is not prone to breakage or be damaged, thereby allowing the battery have a higher cycle performance. In particular, when the lithium-based metal layer , having an appropriate thickness, is directly bonded to the polymer material base layer, the above-mentioned protective effect of the polymer material base layer can be more effectively exerted, so that the battery has a higher safety performance. For example, the thickness of the lithium-based metal layer is 5 µm, 8 µm, 10 µm, 12 µm, 15 µm, 18 µm, 25 µm, or 30 µm.

In some preferred embodiments, the thickness of the polymer material base layer is from 3 µm to 20 µm, preferably from 4 µm to 15 µm, more preferably from 5 µm to 10 µm; and the thickness of the lithium-based metal layer is from 3 µm to 60 µm, preferably from 3 µm to 40 µm, more preferably from 3 µm to 20 µm. This enables lithium metal batteries to have higher energy density, safety performance and cycle performance.

In some embodiments, the lithium-based metal layer includes one or more of metal lithium and lithium alloy. The content of the lithium element in the lithium alloy is preferably 90% by weight or more, preferably 95% by weight or more, and more preferably 99% by weight or more. For example, the content of lithium element in the lithium alloy may be 97wt%, 97.5wt%, 98wt%, 98.5wt%, 99.1wt%, 99.3wt%, 99.5wt%, 99.7wt% or 99.9wt% and the like. The lithium alloy preferably comprises one or more of a lithium indium alloy, a lithium zinc alloy, a lithium magnesium alloy, a lithium tin alloy, and a lithium silver alloy, for example, a lithium silver alloy. Preferably, the mass ratio of lithium element to silver element in the lithium-silver alloy is from 90 to 99.9: from 0.1 to 10, more preferably from 98 to 99: from 1 to 2. When the lithium-based metal layer is directly bonded to the polymer material base layer in the negative electrode plate, and the lithium-based metal layer is made of appropriate materials, it can promote uniform deposition of lithium ions, improve safety performance of the battery, and also help improve cycle performance of the battery.

In some embodiments, the lithium-based metal layer includes a lithium layer and a dissimilar metal layer laminated with each other, the dissimilar metal layer is in contact with the polymer material base layer, and the dissimilar metal layer includes one or more of indium, zinc, magnesium, tin, and silver. After the lithium-based metal layer is activated, such as the battery is subjected to a charge-discharge cycle, an alloy (such as lithium-indium alloy, lithium-zinc alloy, lithium-magnesium alloy, lithium-tin alloy, lithium-silver alloy) of lithium and dissimilar metals is formed inside the lithium-based metal layer to promote uniform deposition of lithium ions. Preferably, the weight ratio of the lithium layer to the dissimilar metal layer is from 90 to 99.9: from 0.1 to 10, more preferably from 98 to 99 : from 1 to 2.

In some embodiments, the sheet resistance of the negative electrode plate is ≤ 100 mΩ/□, preferably ≤ 50 mΩ/□, and more preferably ≤ 30 mΩ/□. The sheet resistance of the negative electrode plate is low, which can improve its over-current capability, so that the battery has a higher cycle performance.

In some embodiments, the puncture resistance strength of the negative electrode plate is ≥ 0.3 kN/mm, preferably ≥ 0.6 kN/mm. More preferably, the puncture resistance strength of the negative electrode plate is from 1 kN/mm to 10 kN/mm. The puncture resistance of the negative electrode plate can improve safety performance of the battery. At the same time, the negative electrode plate can also have appropriate flexibility to prevent it from breaking due to winding of electrode plate or subjected to pressure (such as roll pressure, battery's cyclic expansion force, external impact force, and the like), thereby allowing the battery have higher cycle performance. For example, the puncture resistance of the negative electrode plate is 2 kN/mm, 3 kN/mm, 4 kN/mm, 5 kN/mm, 6 kN/mm, 7 kN/mm, 8 kN/mm or 9 kN/mm.

In some embodiments, the tensile strength of the negative electrode plate may be from 20 MPa to 500 MPa, preferably from 70 MPa to 500 MPa, and more preferably 220 MPa to 500 MPa. The negative electrode plate has high mechanical strength so as to prevent it from being excessively stretched or deformed, thereby effectively preventing the lithium-based metal layer from breaking, and rendering the battery to have a high cycle performance.

In some embodiments, the elongation at break of the negative electrode plate is ≥0.5%, preferably ≥1%, more preferably ≥1.6%. The negative electrode plate has an appropriate breaking elongation, which is not easy to break during its production and battery cycle, thereby improving the cycle performance of the battery.

In some embodiments, the peel strength between the polymer material base layer and the lithium-based metal layer is ≥ 10 N/m, preferably ≥ 20 N/m, and more preferably ≥ 30 N/m. The peeling strength between the polymer base layer and the lithium-based metal layer is relatively high. During the battery cycle, the lithium-based metal layer is not easy to peel off, which is conducive to making the battery have a higher cycle performance.

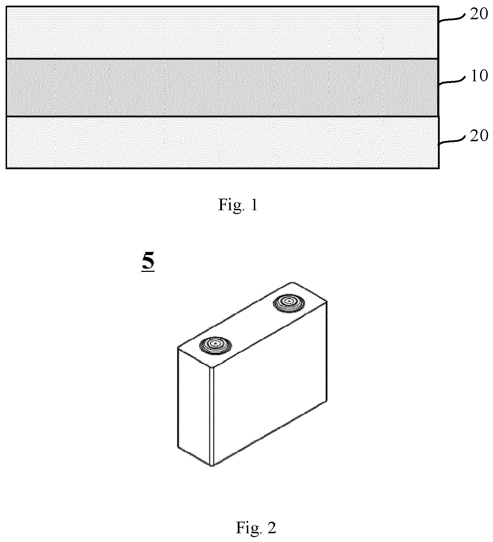

Fig. 1 is a schematic diagram of the structure of a negative electrode plate as an example. Referring to Fig. 1, the polymer base layer 10 has two opposite surfaces in its own thickness direction, and the lithium-based metal layer 20 is directly laminated on either or both of the two opposite surfaces of the polymer material base layer 10 .

In this application, parameters for each lithium-based metal layer are the parameter ranges of the lithium-based metal layer on one side of the polymer material base layer. When the lithium-based metal layer is arranged on both surfaces of the polymer material base layer, and parameters for the lithium-based metal layer on any one of the surfaces meet requirements of the present application, such a situation is considered to fall within the protection scope of the present application.

In this application, the thickness of the polymer material base layer and the lithium-based metal layer can be measured by a high-qualified micrometer.

The tensile strength of the negative electrode plate and the polymer material base layer has a well-known meaning in the art, and can be tested by using instruments and methods known in the art, such as a tensile testing machine. As an example, the test method comprises cutting the negative electrode plate and the polymer material base layer into a sample of 15mm×200mm and measuring the thickness h (µm) of the sample with a high-qualified micrometer; carrying out a tensile test on a tensile test machine (such as Instron 3365 type machine) under normal temperature and pressure (25°C, 0.1MPa), where an initial position is set so that the sample length between the clamps is 50mm, and the tensile speed is 50mm/min; recording the load L(N) at which breakage occurs due to stretching. According to L/(15×h×10⁻³), the tensile strength is calculated. The test may refer to GB/T 1040.1-2018.

The puncture resistance strength of the negative electrode plate and the polymer material base layer has a well-known meaning in the art, and can be tested by using instruments and methods known in the art, such as a tensile tester. As an example, the test method comprises taking the negative electrode plate or polymer material base layer and cutting it into a disc sample with a 100 mm diameter; measuring the thickness D (µm) of the sample; carrying out a puncture test using a tensile testing machine (such as Instron 3365 type) equipped with a puncture clamp (a steel needle with a diameter of 1 mm and a tip radius of 0.5 mm) under normal temperature and pressure (25 °C, 0.1 MPa) where the puncture speed is 50 mm/min; recording the load T (N) at which fracture occurs due to puncture; and calculating the puncture resistance strength (kN/mm) = T/D. The test can refer to GBT37841-2019.

The elongation at break of the negative electrode plate and the polymer material base layer has a well-known meaning in the art, and can be tested by using instruments and methods known in the art, such as a tensile testing machine. As an example, the test method comprises cutting the negative electrode plate or the polymer material base layer into a sample of 15mm×200mm; carrying out a tensile test on a tensile test machine (such as Instron 3365 type machine) under normal temperature and pressure (25°C, 0.1MPa), where an initial position is set so that the sample length between the clamps is 50mm, and the tensile speed is 50mm/min; recording the displacement y(mm) of the instrument at which break occurs due to stretching; and finally calculating the elongation at break according to (y/50)×100%. The test may refer to GB/T1040.1-2018.

The melting point of the polymer material has a well-known meaning in the art, and can be tested by using instruments and methods known in the art, such as differential scanning calorimetry (DSC). An exemplary test method comprises weighing a dried polymer material sample of from 1 mg to 20 mg and putting it into an aluminum or alumina crucible, after sealing, placing it on the sample stage of a DSC (such as Mettler-Toledo's DSC-3) where the test temperature is set in the range of 20 °C to 300°C, and the heating rate is 10 °C/min, and finally determining the melting peak value Tₘ as the melting point of the polymer material.

The thermal decomposition temperature of the polymer material has a well-known meaning in the art, and can be tested by using instruments and methods known in the art, such as a thermal gravity analysis (TGA). An exemplary test method comprises weighing a dried polymer material sample of from 5 mg to 20 mg and putting it into an alumina crucible, placing it on the sample stage of a TG (such as Mettler-Toledo's TGA-2) where the test temperature is set in the range of 20 °C to 550 °C, and the heating rate is 10 °C/min, and finally determining the temperature Tₙ at which the thermal weight loss is 5% as the thermal decomposition temperature of the polymer material.

The molecular weight of the polymer material has a well-known meaning in the art, and can be tested using instruments and methods known in the art, such as gel permeation chromatography (GPC). An exemplary test method comprises selecting tetrahydrofuran (THF) or dimethylformamide (DMF) as a mobile phase, preparing a polymer material/mobile phase test solution of 0.1 mg/mL to 5.0 mg/mL, plotting a molecular weight standard curve of the polymer material with a standard solution of the corresponding standard sample; then injecting 20 µL of the solution to be tested, and calculating the molecular weight of the polymer material according to its retention time. The test can adopt Agilent (Agilent) 1290 Infinity II GPC system.

The sheet resistance of the negative electrode plate has a well-known meaning in the art, and can be tested by using instruments and methods known in the art, such as a four-probe method, which can be carried out by using a RTS-9 double-electric four-probe tester. An exemplary method is as follows: cutting the negative electrode plate into a sample of 20mm×200mm, and measuring the square resistance of the central area of the sample by means of a four-probe method, in which using RTS-9 double-electric four-probe tester, the test is conducted at a temperature of 23±2°C under 0.1 MPa, with a relative humidity of ≤ 65%. The test is performed by cleaning the surface of the sample, then placing it horizontally on the test bench; putting down the four probes so that the probes are in good contact with the surface of the lithium-based metal layer; then calibrating the current range of the sample under automatic test mode, so as to measure the sheet resistance under a suitable current range; collecting 8 to 10 data points of the same sample for analyzing the accuracy and error of the measuring data; and taking the average value, which is recorded as the sheet resistance value of the negative electrode plate.

The peel strength between the polymer material base layer and the lithium-based metal layer has a well-known meaning in the art, and can be tested by using instruments and methods known in the art. An exemplary test method comprises taking a negative electrode plate where the lithium metal layer is arranged on one side of the polymer material base layer as a test sample with a width d of 0.02m; sticking a 3M double-sided tape evenly on a stainless steel plate, and then sticking the test sample evenly on the double double-sided tape, with the polymer material base layer being bound to the double-sided tape; peeling the lithium metal layer from the polymer material base layer of the test sample continuously at a speed of 50 mm/min under normal temperature and pressure (25°C, 0.1MPa) at an angle of 180° with a tensile test machine (such as Instron 3365 type machine); reading the maximum tensile force *x* (N) on the data diagram of tensile force vs. displacement, and calculating the peel strength F(N/m) between the polymer material base layer and the lithium-based metal layer according to formula F = *x*/*d* .

### [Positive electrode plate]

The positive electrode plate includes a positive electrode current collector and a positive electrode film arranged on the positive electrode current collector. For example, the positive electrode current collector has two opposite surfaces in its own thickness direction, and the positive electrode film is laminated on either or both of the two opposite surfaces of the positive electrode current collector.

The positive electrode film includes a positive electrode active material. The specific type of the positive electrode active material is not subject to specific restrictions, and can be selected according to requirements. Preferably, the positive electrode active material is one or more selected from lithium cobalt oxide (LiCoO₂), lithium nickel oxide (LiNiO2), lithium iron phosphate (LiFePO₄), lithium cobalt phosphate (LiCoPO₄), lithium manganese phosphate (LiMnPO₄), lithium nickel phosphate (LiNiPO₄), lithium manganese oxide (LiMnO₂), binary material LiNiₓA₍₁₋ₓ)O₂ (A is one selected from Co and Mn, 0 <x <1), ternary material LiNiₘBₙC₍₁₋ₘ₋ₙ₎O₂ (B and C are each independently selected from at least one of Co, Al, and Mn, and B and C are not the same, 0 <m <1, 0 <n <1), its doped and/or coated modified materials.

The positive electrode film optionally includes a binder. The specific type of the binder is not subject to specific restrictions, and can be selected according to requirements. As an example, the binder may include one or more of polyvinylidene fluoride (PVDF), polytetrafluoroethylene (PTFE), polyacrylic acid (PAA), polyvinyl alcohol (PVA), sodium alginate (SA), polymethacrylic acid (PMAA) ) and carboxymethyl chitosan (CMCS).

The positive electrode film optionally includes a conductive agent. The specific type of the conductive agent is not subject to specific restrictions, and can be selected according to requirements. As an example, the conductive agent may include one or more of graphite, superconducting carbon, acetylene black, carbon black, Ketjen black, carbon dots, carbon nanotubes, graphene, and carbon nanofibers.

In some embodiments, the positive electrode film optionally further includes an ionic conductor polymer, a lithium salt, and a plasticizer. The ionic conductor polymer can be one or more selected from polyethylene oxide, polyethylene terephthalate, polyimide, polyvinylidene fluoride, polymethyl methacrylate, polyacrylonitrile, polypropylene carbonate, polyvinyl chloride, vinylidene fluoride, 2-acrylamido-2-methylpropanesulfonic acid, trimethylolpropane triacrylate, hyperbranched polyacrylate, methyl methacrylate copolymer. The lithium salt can be one or more selected from lithium hexafluorophosphate (LiPF₆), lithium tetrafluoroborate (LiBF₄), lithium perchlorate (LiClC₄), lithium hexafluoroarsenate (LiAsF₆), lithium bisfluorosulfonimide (LiFSI), lithium bistrifluoromethanesulfonimide (LiTFSI) and lithium trifluoromethanesulfonate (LiCF₃SO₃). The plasticizer can be one or more selected from polyethylene glycol diglycidyl ether (PEGDE), polyethylene glycol diacrylate (PEGDA), polyethylene glycol amine (PEGNH₂), succinonitrile (SN), triethyl phosphate (TEP), fluoroethylene carbonate (TEP), dimethyl ether (DME), diethyl carbonate (DEC), ethylene carbonate (EC), and phthalates.

Further, the weight ratio of the ion conductor polymer in the positive electrode film may be from 1wt% to 10wt%, such as from 3wt% to 8wt%. The weight ratio of the lithium salt in the positive electrode film may be from 1wt% to 5wt%, such as from 1.5wt% to 3wt%. The weight ratio of the plasticizer in the positive electrode film may be from 1wt% to 5wt%, such as from 1.5wt% to 3wt%.

### [Electrolyte]

The electrolyte can be at least one of a liquid electrolyte (i.e., an electrolytic solution) and a solid electrolyte.

In some optional embodiments, an electrolyte is used as an electrolytic solution. The electrolytic solution includes an electrolyte salt and a solvent.

In some embodiments, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiCF₃SO₃), lithium difluorooxalate borate (LiDFOB), lithium dioxalate borate (LiBOB), lithium difluorophosphate (LiPO₂F₂), lithium difluorodioxalate phosphate (LiDFOP) and lithium tetrafluorooxalate phosphate (LiTFOP).

In some embodiments, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC) and butylene carbonate (BC).

In some embodiments, the electrolytic solution may also optionally include additives. For example, the additives may include additives to improve battery overcharge performance, additives to improve battery high temperature performance, additives to improve battery low temperature performance, and the like.

In some preferred embodiments, the electrolyte includes a solid electrolyte. The solid electrolyte is usually arranged between the positive electrode plate and the negative electrode plate in the form of a solid electrolyte membrane to conduct ions. The solid electrolyte membrane can be one or more selected from inorganic solid electrolyte membranes, solid polymer electrolyte membranes and inorganic-organic composite solid electrolyte membranes. The use of solid electrolyte membrane is beneficial to reduce thickness of the battery, and at the same time, compared with the electrolytic solution, there is no risk of leakage. In these embodiments, the lithium metal battery is an all-solid-state battery or a semi-solid-state battery.

Preferably, the solid electrolyte membrane is arranged to contact with the lithium-based metal layer of the negative electrode plate. The solid electrolyte membrane is arranged in contact with the lithium-based metal layer, which can promote deposition of lithium ions from the positive electrode on the lithium-based metal layer more uniformly, and further suppress generation of lithium dendrites, thereby further improving safety performance of the battery. As a specific example, the positive electrode plate, the solid electrolyte membrane, and the negative electrode plate can be made into an electrode assembly through a lamination process or a winding process, wherein the solid electrolytic film is interposed between the positive electrode plate and the negative electrode plate to sever as an ion conductor and electrical insulation.

The lithium metal battery of the present application may use solid electrolyte membranes known in the art. In some embodiments, the solid electrolyte membrane includes at least the following components based on parts by weight: 100 parts of a polymer matrix; and 5-40 parts of a lithium salt. The polymer matrix can be one or more selected from polyethylene oxide, polyethylene terephthalate, polyimide, polyvinylidene fluoride, polymethyl methacrylate, polyacrylonitrile, polypropylene carbonate, polyvinyl chloride, vinylidene fluoride, 2-acrylamido-2-methylpropanesulfonic acid, trimethylolpropane triacrylate, hyperbranched polyacrylate, methyl methacrylate copolymer. The lithium salt can be one or more selected from LiPF₆, LiBF₄, LiClO₄, LiAsF₆, LiCF₃SO₃, LiFSI, and LiTFSI.

Further, the solid electrolyte membrane may also optionally include an inorganic filler. For example, based on parts by weight, the solid electrolyte membrane includes 10-60 parts of inorganic filler. The inorganic filler can be one or more selected from lithium lanthanum zirconium oxide (LLZO), lithium lanthanum titanium oxide (LLTO), tantalum-doped lithium lanthanum zirconium oxide (LLZTO), lithium aluminum titanium phosphate (LATP), lithium germanium aluminum phosphate (LAGP), lithium thiophosphate (Li₃PS₄), lithium chlorinated thiophosphate (Li₆PS₅Cl), germanium-doped lithium thiophosphate (Li₁₀GeP₂S₁₂), aluminum oxide (Al₂O₃), and titanium oxide (TiO₂).

Further, the solid electrolyte membrane may also optionally include a plasticizer. For example, based on parts by weight, the solid electrolyte membrane includes 1-20 parts of plasticizer. The plasticizer can be one or more selected from polyethylene glycol diglycidyl ether (PEGDE), polyethylene glycol diacrylate (PEGDA), polyethylene glycol amine (PEGNH₂), succinonitrile (SN), triethyl phosphate (TEP), fluoroethylene carbonate (TEP), dimethyl ether (DME), diethyl carbonate (DEC), ethylene carbonate (EC), and phthalates.

The solid electrolyte membrane can be prepared by methods known in the art. For example, the polymer matrix, lithium salt, and optional inorganic fillers and plasticizers are dispersed in a solvent, and cast to form a membrane. The membrane is then vacuum dried to obtain a solid electrolyte membrane.

### [Separator]

In the lithium metal battery using the electrolytic solution, a separator may also be included. The separator is arranged between the positive electrode plate and the negative electrode plate to isolate them. When a separator is used, the positive electrode plate, the negative electrode plate and the separator can be formed into an electrode assembly through a winding process or a lamination process. There is no particular limitation on the type of separator in this application, and any well-known porous structure separator with good chemical stability and mechanical stability can be selected. In some embodiments, the separator may be one or more selected from glass fiber film, non-woven fabric film, polyethylene film, polypropylene film, polyvinylidene fluoride film and their composite films.

The lithium metal battery of the present application may include an outer package. The outer package is used for encapsulating the electrode assembly. When the lithium metal battery adopts an electrolytic solution, the electrode assembly is immersed into the electrolytic solution. The present application has no particular limitation on the type of the outer package, which may be selected according to actual demand. In some embodiments, the outer package of the lithium metal battery may be a hard shell, such as a hard plastic shell, an aluminum shell, a steel shell, and the like. The outer package of the lithium metal battery can also be a soft package, such as a bag-type soft package. The material of the soft bag may be plastic, for example, it may include one or more of polypropylene (PP), polybutylene terephthalate (PBT), polybutylene succinate (PBS), and the like.

The present application has no particular limitation to the shape of the lithium metal battery, which thus may be cylindrical, square or other arbitrary shapes. Fig. 2 shows an example of the lithium metal battery 5 having a square structure.

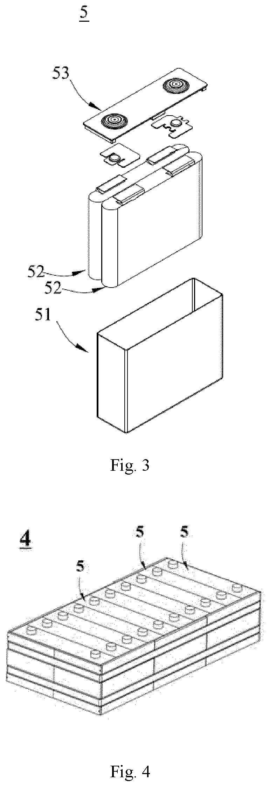

Referring to Fig. 2 and Fig. 3, the outer package may include a shell 51 and a cover plate 53. The shell 51 may include a bottom plate and side plates connected to the bottom plate, and the bottom plate and the side plates enclose an accommodating cavity. The shell 51 has an opening communicated with the receiving cavity, and the cover plate 53 can cover the opening to close the accommodating cavity. The electrode assembly 52 is packaged in the receiving cavity. The number of the electrode assembly 52 contained in the lithium metal battery 5 can be one or several, which can be adjusted according to requirements.

In some embodiments, the lithium metal battery can be assembled into a battery module. The number of lithium metal battery included in the battery module may be more than one, and the particular number may be adjusted according to the application and capacity of the battery module.

Fig. 4 shows an example of the battery module 4. Referring to Fig. 4, in the battery module 4, a plurality of lithium metal batteries 5 may be arranged in sequence along the length direction of the battery module 4. Of course, they may be arranged in any other manner. Furthermore, a plurality of lithium metal batteries 5 can be fixed by fasteners.

The battery module 4 may optionally include a housing having an accommodating space, in which a plurality of lithium metal batteries 5 are accommodated.

In some embodiments, the above-mentioned battery modules may also be assembled into a battery pack, and the number of battery modules included in the battery pack may be adjusted according to the application and capacity of the battery pack.

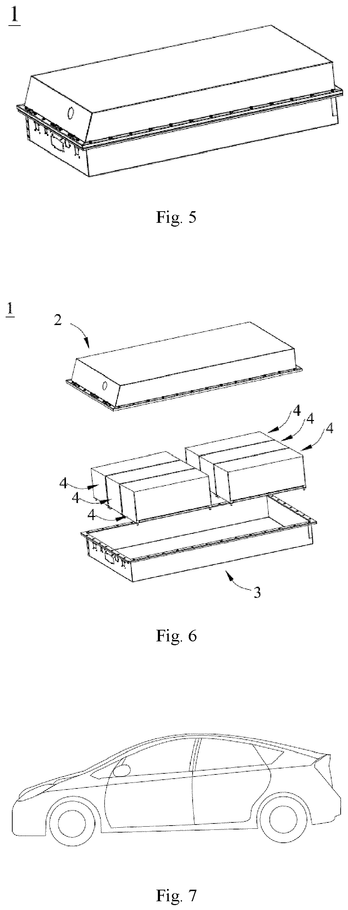

Figs. 5 and 6 show an example of the battery pack 1. Referring to Figs. 5 and 6, the battery pack 1 may include a battery case and a plurality of battery modules 4 provided in the battery case. The battery case comprises an upper case body 2 and a lower case body 3. The upper case body 2 may cover the lower case body 3 to form a closed space for accommodating the battery module 4. A plurality of battery modules 4 may be arranged in the battery case in arbitrary manner.

### [Preparation process]

In some embodiments, the preparation process of the lithium metal battery may include the step of assembling the negative electrode plate, the positive electrode plate and the solid electrolyte membrane to form a lithium metal battery. In some embodiments, the positive electrode plate, the solid electrolyte membrane, and the negative electrode plate may be to prepare an electrode assembly by a winding process or a laminating process; the electrode assembly is placed in an outer package and sealed to obtain a lithium metal battery.

In some embodiments, the preparation process of the lithium metal battery may further include the step of preparing a positive electrode plate. As an example, the positive electrode active material and optional conductive agent, binder, ionic conductor polymer, lithium salt, and plasticizer are dispersed in a solvent (such as N-methylpyrrolidone, abbreviated as NMP) to form a uniform positive electrode slurry; the positive electrode slurry is applied to the positive electrode current collector, and after drying, cold pressing and other processes, a positive electrode plate is obtained.

In some embodiments, the preparation process of the lithium metal battery may further include the step of preparing a negative electrode plate, for example, the step of preparing a negative electrode plate by laminating a polymer material substrate and a lithium-based metal sheet.

The negative electrode plate can be prepared by calendering. After the lithium metal sheet is laminated with the polymer material substrate, the negative electrode sheet is formed through rolling. In some embodiments, as for a negative electrode plate with a lithium-based metal layer on both sides of the polymer material base layer, the lithium-based metal sheet can be attached to one side of the polymer material substrate, and then subjected to rolling so that a lithium-based metal layer is bonded to one side of the polymer material base layer; then another lithium-based metal sheet is attached to the other side of the polymer material layer, and subjected to rolling so that a double-sided negative electrode is obtained.

The lamination process is preferably carried out in an environment with a humidity ≤ 0.2% and a temperature of 10°C to 28°C. This can reduce the reaction of lithium metal in the environment.

In the lamination step, the temperature of the pressing roller is preferably from 25°C to 45°C, more preferably from 27°C to 35°C. In this way, a higher bonding strength between the polymer material layer and the lithium-based metal layer can be achieved, and the stability of the lithium-based metal layer can be kept at the same time.

The polymer material substrate may be a thin film of polymer material. The aforementioned polymer materials can be used. The thickness of the polymer material substrate may be from 3 µm to 20 µm, preferably from 4 µm to 15 µm, and more preferably from 5 µm to 10 µm.

The lithium metal sheet may be a lithium belt. The thickness of the lithium belt may be from 60 µm to 100 µm, preferably from 60 µm to 80 µm.

As a specific example, in an environment with a humidity of ≤0.2% and a temperature of 10°C to 28°C, a lithium belt with a thickness of 60 µm to 100 µm is attached to one side of a polymer material substrate with a thickness of 3 µm to 20 µm. The gap width between rollers of rolling machine is adjusted to from 20µm to 40µm and the temperature of the pressing roll is from 25°C to 45°C. A single-sided negative electrode plate is prepared by continuous rolling. After winding, the temperature of coil was dropped to 20°C, and the preparation of a double-sided negative electrode plate adopts the same method.

In some embodiments, the method for preparing a lithium metal battery may include the step of assembling a negative electrode plate, a positive electrode plate, a solid electrolyte membrane, and an electrolytic solution to form a lithium metal battery.

As an example, a positive electrode plate, a solid electrolyte membrane, and a negative electrode plate can be wound or laminated to prepare an electrode assembly; the electrode assembly is placed in an outer package, in which an electrolytic solution is injected, and then sealed to obtain a lithium metal battery.

As another example, a hard-to-volatilize electrolytic solution is added to the slurry for preparing a solid electrolyte membrane and a positive electrode active material slurry to prepare the solid electrolyte membrane and positive electrode plate containing the electrolyte. The positive electrode plate, solid electrolyte membrane, and negative electrode plate are wound or laminated to prepare an electrode assembly; the electrode assembly is placed in an outer package, in which an electrolytic solution is injected, and then sealed to obtain a lithium metal battery. The hard-to-volatilize electrolytic solution is almost or completely non-volatile during the preparation process of the solid electrolyte membrane and the positive electrode plate. For example, the hard-to-volatilize electrolytic solution may include an ionic liquid electrolyte. The ionic liquid electrolyte may include one or more of 1-methyl-1-propylpyrrolidinium bis(fluorosulfonyl)imide (Py13FSI), 1-butyl-1-methylpyrrolidinium bis(fluorosulfonyl)imide (Py14FSI), 1-ethyl-3-methylimidazoline bis(trifluoromethylsulfonyl)imide (EMIMTFSI), 1-ethyl-3-methylimidazole tetrafluoroborate (EMIMBF4), and the like.

In some embodiments, the preparation process of the lithium metal battery may include the step of assembling the negative electrode plate, the positive electrode plate, the separator, and the electrolytic solution to form the lithium metal battery. As an example, a positive electrode plate, a separator, and a negative electrode plate can be wound or laminated to prepare an electrode assembly; the electrode assembly is placed in an outer package, in which an electrolytic solution is injected, and then sealed to obtain a lithium metal battery.

In these embodiments, the positive electrode plate and the negative electrode plate can be prepared by a method known in the art, such as the preparation process described above.

### Apparatus

The present application further provides an apparatus including any one or more lithium metal battery according to the present application. The lithium metal battery may be used as a power source for the apparatus or may be used as an energy storage unit for the apparatus. The apparatus may be, but is not limited to, mobile apparatuses (such as mobile phones, notebook computers, etc.), electric vehicles (such as pure electric vehicles, hybrid electric vehicles, plug-in hybrid electric vehicles, electric bicycles, electric scooters, electric golf vehicles, electric trucks, etc.), electric trains, ships and satellites, energy storage systems, etc.

The apparatus, according to its application requirements, may include a lithium metal battery, a battery module, or a battery pack.

Fig. 7 shows an example of the apparatus. The apparatus is a pure electric vehicle, a hybrid electric vehicle, a plug-in hybrid electric vehicle, etc. In order to meet the requirements of the apparatus for high power and high energy density of the battery, a battery pack or a battery module can be used. The battery pack or battery module includes any one or several lithium metal batteries of the present application. Preferably, the lithium metal battery is used in combination with a power-type secondary battery.

As another example, the apparatus may be a mobile phone, a tablet computer, a notebook computer etc. The apparatus may include the lithium metal battery as a power source.

### EXAMPLES

The disclosure of the present application is described in more details through the following examples, which are only for illustrative purpose, because it is apparent to a person skilled in the art that various modifications and changes could be made within the scope of the disclosure of the present application. Unless otherwise stated, all parts, percentages, and ratios reported in the examples below are based on weight, all the reagents used in the examples are commercially available or synthesized according to conventional methods and can be directly used without further treatment, and all the instruments used in the examples are commercially available.

### Example 1

### Preparation of negative electrode plate

The negative electrode plate was prepared by calendering. In a dry room with a humidity of ≤0.2% and a temperature of 18±3 °C, a lithium belt with a thickness of 50 µm was attached to one side of polypropylene (PP) with a thickness of 10 µm. The gap width of rolling machine was adjusted to 28µm and the temperature of the pressing roll was 25°C. The preparation of a single-sided negative electrode plate was finished by continuous rolling. After winding, the temperature of coil was dropped to 20°C, and the preparation of a double-sided negative electrode plate was finished with the same method. The thickness of the lithium layer on both sides was 20 µm each, and the thickness of the PP base layer was 10 µm.

### Preparation of positive electrode plate

A positive electrode active material LiFePO₄, a conductive agent Super P, a conductive agent VGCF (vapor-grown carbon fiber), an ionic conductor polymer polyethylene oxide PEO, a lithium salt LiTFSI, a plasticizer SN in a mass ratio of 88:1:1:6:2:2 was fully stirred and mixed in an appropriate amount of NMP to form a uniform positive electrode slurry; the positive electrode slurry was applied to the surface of a positive electrode current collector aluminum foil (thickness 13 µm), dried and cold pressed, to obtain the positive electrode plate. The compacted density of the positive electrode plate was 2.5 g/cm³, and the areal density was 18.1 mg/cm².

### Solid electrolyte membrane

100 parts of polyethylene oxide (PEO) and 35 parts of LiTFSI were dissolved in acetonitrile. After stirring to dissolve, 12 parts of LATP and 6 parts of SN were then added. After stirring, a translucent viscous liquid was obtained. The viscous liquid was casting on a release film to form a film. After vacuum drying, a solid electrolyte film was obtained. The parts were all parts by weight.

### Preparation of Lithium Metal Battery

The positive electrode plate, the solid electrolyte membrane, and the negative electrode plate were sequentially stacked and wound to obtain an electrode assembly. The electrode assembly were put into an outer package. After vacuum packaging, high temperature aging, and low current activation, a lithium metal battery was obtained. The battery size was 900 mm × 700 mm × 50 mm.

### Examples 2 to 16 and Comparative Examples 1 to 2

The preparation process was similar to that of Example 1, with the exception that the relevant parameters of the negative electrode plate were adjusted to obtain the corresponding lithium metal battery, as shown in Table 1 to Table 3 for details.

### Test part

### 1) Energy density test of battery

At 25°C, the batteries of examples and comparative examples were charged to 3.65 V at a constant current of 0.2 C, and then charged at a constant voltage to a current of 0.05 C. After standing for 5 minutes, the batteries were discharged at a constant current of 0.2 C to 2.5 V This was a charge and discharge cycle. The batteries were charged and discharged for 30 cycles according to this method, and the discharge energy of the 30th cycle was divided by the total weight of the battery to calculate the weight energy density of the battery.

### 2) Cycle performance test of battery

At 25°C, the batteries of examples and comparative examples were charged to 3.65 V at a constant current of 0.2 C, and then charged at a constant voltage to a current of 0.05 C. After standing for 5 minutes, the batteries were discharged at a constant current of 0.2 C to 2.5 V This was a charge and discharge cycle. The batteries were subjected to 500 charge-discharge cycles according to this method. The cycle performance of batteries was evaluated by the capacity retention rate of the discharge capacity at the 500th cycle/the discharge capacity at the second cycle×100%.

### 3) Battery safety performance test

### (31) Overcharge test

At 25°C, the batteries of the examples and comparative examples were charged at a constant current of 0.2 C to 3.65 V, and then charged at a constant voltage to a current of 0.05 C. At this time, the batteries were fully charged. The fully charged batteries were subjected to an overcharge test at a constant current of 3 C . When the batteries were overcharged, the voltage increased to 5 V and maintained the state for 7 hours, and the battery voltage increased rapidly after 7 hours. Then the battery cap was pulled off and the voltage dropped to 0 V If batteries did no catch fire or explode, it was considered to meet safety standards and pass the test.

### (32) Short circuit test

After fully charging the batteries of examples and comparative examples following the method in (31), a wire with a resistance of 50 mΩ was used to short-circuit the positive and negative electrodes of these batteries; and then surface temperature changes of these batteries were tested. When the maximum surface temperature of batteries was 140 °C, the battery cap was opened. If batteries did no catch fire or explode, it was considered to meet safety standards and pass the test.

### (33) puncture test

After fully charging the batteries of examples and comparative examples following the method in (31), the batteries were placed on the test platform, and pierced with a steel needle with a diameter of 3 mm perpendicular to the large surface of the batteries at a speed of 100 mm/min. The steel needle was kept in the batteries for 2 h, then pushed out at the same speed. If batteries did no catch fire or explode, it was considered to meet safety standards and pass the test.

**Table 1: Related parameters of negative electrode plate**

| Nos. of electrode plates | Lithium-based metal layers Material | Polymer material base layers | | | | | | | |
|---|---|---|---|---|---|---|---|---|---|
| | | thickness µm | Type of polymer material | Tensile strengt h MPa | puncture resistanc e strength kN/mm | Elongatio n at break | Melting point °C | thermal decompositio n temperature °C | thickness µm |
| 1 | Li | 20 | PE Mw=10, 000 | 2.56 | 0.15 | about 5% | 110 | 300 | 12 |
| 2 | Li | 20 | PP Mw=100 ,000 | 53.7 | 2.66 | about 5% | 170 | 330 | 10 |
| 3 | Li | 20 | PET Mw=50, 000 | 368 | 34.17 | about 1% | 270 | 300 | 6 |
| 4 | Li | 20 | PA66 Mw=100 ,000 | 221 | 26.0 | about 1% | 110 | 350 | 6 |
| 5 | Li | 20 | PTFE Mw=100 ,000 | 409 | 30.7 | about 0.6% | 110 | 530 | 10 |
| 6 | Li | 20 | PS Mw=96, 000 | 442 | 39.2 | about 0.6% | 240 | 280 | 10 |
| 7 | Li | 20 | PS-PE Mw=89, 000 | 357 | 30.2 | about 1% | 230 | 280 | 10 |
| 8 | Li | 15 | PP Mw=100 ,000 | 53.7 | 2.66 | about 5% | 170 | 330 | 10 |
| 9 | Li | 10 | PP Mw=100 ,000 | 53.7 | 2.66 | about 5% | 170 | 330 | 10 |
| 10 | Li | 6 | PP Mw=100 ,000 | 53.7 | 2.66 | about 5% | 170 | 330 | 10 |
| 11 | Li | 3 | PP Mw=100 ,000 | 53.7 | 2.66 | about 5% | 170 | 330 | 10 |
| 12 | Li | 30 | PP Mw=100 ,000 | 53.7 | 2.66 | about 5% | 170 | 330 | 10 |
| 13 | Li | 40 | PP Mw=100 ,000 | 53.7 | 2.66 | about 5% | 170 | 330 | 10 |
| 14 | Li | 50 | PP Mw=100 ,000 | 53.7 | 2.66 | about 5% | 170 | 330 | 10 |
| 15 | lithium indium alloy | 20 | PP Mw=100 ,000 | 53.7 | 2.66 | about 5% | 170 | 330 | 10 |
| 16 | lithium silver alloy | 20 | PP Mw=100 ,000 | 53.7 | 2.66 | about 5% | 170 | 330 | 10 |
| 17 | A 6µm thick copper foil was bonded with a 15µm thick lithium layer on both sides | | | | | | | | |
| 18 | A 6µm thick copper foil was bonded with a 15µm thick lithium indium alloy layer on both sides | | | | | | | | |

In Table 1, Mw represents the weight average molecular weight of polymer materials; PA66 is polyhexamethylene adipamide, commonly known as nylon-66; PS-PE is a block copolymer of polystyrene and polyethylene; lithium indium alloy (Plates 15 and 18) contain 99% by weight of lithium and 1% by weight of indium; the lithium-silver alloy (plate 16) contains 99% by weight of lithium and 1% by weight of silver.

**Table 2: Related parameters of negative electrode plate**

| Nos. of electrode plates | Sheet resistance mΩ/□ | puncture resistance strength kN/mm | Tensile strength MPa | Elongation at break | Peel strength N/m |
|---|---|---|---|---|---|
| 1 | 25 | 0.30 | 22.6 | about 5% | 25 |
| 2 | 24 | 1.13 | 87.5 | about 1% | 22 |
| 3 | 24 | 5.11 | 390 | about 1% | 32 |
| 4 | 25 | 4.07 | 252 | about 1% | 18 |
| 5 | 25 | 6.62 | 440 | about 1% | 17 |
| 6 | 25 | 8.02 | 462 | about 1% | 16 |
| 7 | 24 | 7.84 | 414 | about 1% | 24 |
| 8 | 27 | 1.08 | 79.1 | about 5% | 25 |
| 9 | 29 | 1.28 | 70.2 | about 5% | 26 |
| 10 | 32 | 1.52 | 63.4 | about 5% | 28 |
| 11 | 50 | 1.83 | 58.9 | about 5% | 31 |
| 12 | 23 | 0.86 | 91.1 | about 5% | 21 |
| 13 | 21 | 0.75 | 98.4 | about 5% | 22 |
| 14 | 20 | 0.64 | 102.5 | about 5% | 19 |
| 15 | 22 | 1.00 | 80.4 | about 5% | 16 |
| 16 | 17 | 1.45 | 85.5 | about 5% | 42 |
| 17 | 11 | 3.58 | 301 | about 2% | 102 |
| 18 | 12 | 302 | 297 | about 2% | 98 |

**Table 3: Battery performance test results**

| | Nos. of electrode plates | Energy density Wh/kg | Cycle performance % | Overcharge test | Short circuit test | puncture test |
|---|---|---|---|---|---|---|
| Ex. 1 | 2 | 329 | 99.0 | pass | pass | pass |
| Ex. 2 | 3 | 331 | 99.1 | pass | pass | pass |
| Ex. 3 | 4 | 331 | 98.9 | pass | pass | pass |
| Ex. 4 | 5 | 328 | 99.0 | pass | pass | pass |
| Ex. 5 | 6 | 329 | 99.0 | pass | pass | pass |
| Ex. 6 | 7 | 330 | 99.1 | pass | pass | pass |
| Ex. 7 | 8 | 335 | 98.9 | pass | pass | pass |
| Ex. 8 | 9 | 337 | 99.0 | pass | pass | pass |
| Ex. 9 | 10 | 340 | 99.0 | pass | pass | pass |
| Ex. 10 | 11 | 349 | 94.5 | pass | pass | pass |
| Ex. 11 | 12 | 314 | 99.1 | pass | pass | pass |
| Ex. 12 | 13 | 308 | 98.9 | pass | pass | pass |
| Ex. 13 | 14 | 303 | 99.0 | pass | pass | pass |
| Ex. 14 | 15 | 273 | 99.4 | pass | pass | pass |
| Ex. 15 | 16 | 326 | 99.6 | pass | pass | pass |
| Ex. 16 | 1 | 329 | <80 at 21th cycle, plate broke during cycle | pass | pass | pass |
| CEx. 1 | 17 | 284 | 99.1 | fail | fail | fail |
| CEx. 2 | 18 | 230 | 99.3 | fail | fail | fail |

From the test results shown in Table 3, it can be seen that by directly bonding the lithium-based metal layer to the polymer material base layer in the present application, the polymer material base layer would not only provide good support and protection to the lithium-based metal layer, but also reduce the weight of the negative electrode plate, and further alleviate the risk of internal short-circuit in the battery, or increase the short-circuit resistance or cut off the conductive path when the battery is short-circuited, thereby improving the weight energy density and safety performance of the lithium metal battery. Furthermore, the battery would also have higher cycle performance.

From the comparison of Example 16 and Examples 1-15, it can be seen that the tensile strength of the polymer material base layer and the negative electrode plate was within an appropriate range, which would increase the weight energy density and safety performance of the lithium metal battery, and made the battery have a higher cycle performance.

Above described are only specific implementations of the present application, but the protection scope of the present application are not intended to be limited thereto. According to the disclosure of the present application, a person of ordinary skill in the art could readily conceive various equivalent modifications and replacements, which shall as a matter of course fall within the protection scope of the present application. Therefore, the protection scope of the present application shall be determined by that of the claims.

## Claims

1. A lithium metal battery (5) comprising a positive electrode plate, a negative electrode plate and an electrolyte, the positive electrode plate comprising a positive electrode current collector and a positive electrode active material layer arranged on at least one surface of the positive electrode current collector and comprising a positive electrode active material, wherein, the negative electrode plate comprises
a polymer material base layer (10); and
a lithium-based metal layer (20) that is directly bonded to both surfaces of the polymer material base layer(10).

2. The lithium metal battery (5) according to claim 1, wherein,
the polymer material base layer (10) has a thickness of from 3 µm to 20 µm, preferably from 5 µm to 10 µm; and/or,
the lithium-based metal layer (20) has a thickness of from 3 µm to 60 µm, preferably from 3 µm to 40 µm, and more preferably from 3 µm to 20 µm.

3. The lithium metal battery (5) according to claim 1 or 2, wherein the polymer material base layer (10) also satisfies one or more of the following (1) to (6):
(1) the polymer material base layer (10) has a tensile strength of from 50 MPa to 500 MPa, preferably from 200 MPa to 500 MPa;
(2) the polymer material base layer (10) has a puncture resistance strength of ≥ 1 kN/mm, preferably from 2 kN/mm to 50 kN/mm;
(3) the polymer material base layer (10) has an elongation at break of ≥ 0.5%, preferably ≥ 1%, more preferably ≥ 1.6%;
(4) a melting point of the polymer material contained in the polymer material base layer (10) is from 100 °C to 300 °C, preferably from 150 °C to 250 °C, more preferably from 180 °C to 220 °C;
(5) a thermal decomposition temperature of the polymer material contained in the polymer material base layer (10) is from 250 °C to 550 °C, preferably from 300 °C to 400 °C, more preferably from 330 °C to 370 °C;
(6) a weight average molecular weight of the polymer material contained in the polymer material base layer (10) is from 10,000 to 2,000,000, preferably from 100,000 to 1,000,000.

4. The lithium metal battery (5) according to any one of claims 1 to 3, wherein the polymer material base layer (10) comprises one or more of polyolefin, polyamide, polyimide, polyester, polycarbonate, and copolymers of the above substances, preferably comprises one or more of polyethylene, polypropylene, polystyrene, polyvinyl chloride, polytetrafluoroethylene, polyamide, polyimide, polycarbonate, polyethylene terephthalate, polybutylene terephthalate, polyethylene naphthalate, polybutylene naphthalate, and copolymers of the above substances.

5. The lithium metal battery (5) according to any one of claims 1 to 4, wherein
the lithium-based metal layer (20) comprises one or more of metal lithium and lithium alloy, and the lithium alloy preferably comprises one or more of lithium indium alloy, lithium zinc alloy, lithium magnesium alloy, lithium tin alloy, and lithium silver alloy; and/or,
the lithium-based metal layer (20) includes a lithium layer and a dissimilar metal layer laminated with each other, the dissimilar metal layer is in contact with the polymer material base layer, and the dissimilar metal layer comprises one or more of indium, zinc, magnesium, tin, and silver.

6. The lithium metal battery (5) according to any one of claims 1 to 5, wherein the negative electrode plate further satisfies one or more of the following (1) to (5):
(1) the negative electrode plate has a sheet resistance of ≤ 100 mΩ/□, preferably ≤ 50 mΩ/□;
(2) the negative electrode plate has a puncture resistance strength of ≥ 0.6 kN/mm, preferably from 1 kN/mm to 10 kN/mm;
(3) the tensile strength of the negative electrode plate is from 70 MPa to 500 MPa, preferably from 220 MPa to 500 MPa;
(4) the negative electrode plate has an elongation at break of ≥0.5%, preferably ≥1%, more preferably ≥1.6%;
(5) a peel strength between the polymer material base layer (10) and the lithium-based metal layer (20) is ≥ 10 N/m, preferably ≥ 20 N/m.

7. The lithium metal battery (5) according to any one of claims 1 to 6, wherein the lithium metal battery (5) is an all-solid-state battery or a semi-solid-state battery, the lithium metal battery (5) further comprises a solid electrolyte membrane arranged in contact with the lithium-based metal layer of the negative electrode plate, and the solid electrolyte membrane comprises the electrolyte; preferably, the solid electrolyte membrane is one or more selected from a solid polymer electrolyte membrane and an inorganic-organic composite solid electrolyte membrane.

8. A method for preparing the lithium metal battery (5) of claims 1-7, comprising the step of laminating a polymer material substrate and a lithium-based metal sheet to prepare a negative electrode plate wherein the lithium-based metal sheet is directly bonded to both surfaces of the polymer material substrate.

9. The method according to claim 8, wherein the laminating step is carried out using a pressing roller, wherein the pressing roller has a temperature of from 25°C to 45°C, preferably from 27°C to 35°C.

10. An apparatus comprising the lithium metal battery (5) according to any one of claims 1-7.

11. A negative electrode plate, comprising:
a polymer material base layer (10); and
a lithium-based metal layer (20) that is directly bonded to both surfaces of the polymer material base layer (10).

## Patentansprüche

1. Lithium-Metall-Batterie (5), umfassend eine positive Elektrodenplatte, eine negative Elektrodenplatte und einen Elektrolyten, die positive Elektrodenplatte einen Positivelektroden-Stromabnehmer und eine Positivelektroden-Aktivmaterialschicht umfasst, die auf mindestens einer Oberfläche des Positivelektroden-Stromabnehmers angeordnet ist und ein Positivelektrodenaktivmaterial umfasst, wobei die negative Elektrodenplatte Folgendes umfasst
eine Polymermaterial-Basisschicht (10); und
eine Lithium-basierte Metallschicht (20), die direkt mit beiden Oberflächen der Polymermaterial-Basisschicht (10) verbunden ist.

2. Lithium-Metall-Batterie (5) nach Anspruch 1, wobei
die Polymermaterial-Basisschicht (10) eine Dicke von 3 µm bis 20 µm, vorzugsweise von 5 µm bis 10 µm aufweist; und/oder,
die Lithium-basierte Metallschicht (20) eine Dicke von 3 µm bis 60 µm, vorzugsweise von 3 µm bis 40 µm und bevorzugter von 3 µm bis 20 µm aufweist.

3. Lithium-Metall-Batterie (5) nach Anspruch 1 oder 2, wobei die Polymermaterial-Basisschicht (10) ferner einen oder mehrere der folgenden Punkte (1) bis (6) erfüllt:
(1) die Polymermaterial-Basisschicht (10) eine Zugfestigkeit von 50 MPa bis 500 MPa, vorzugsweise von 200 MPa bis 500 MPa aufweist;
(2) die Polymermaterial-Basisschicht (10) eine Durchstoßfestigkeit von ≥ 1 kN/mm, vorzugsweise von 2 kN/mm bis 50 kN/mm aufweist;
(3) die Polymermaterial-Basisschicht (10) eine Bruchdehnung von ≥ 0,5 %, vorzugsweise von ≥ 1 %, bevorzugter von ≥ 1,6 % aufweist;
(4) ein Schmelzpunkt des in der Polymermaterial-Basisschicht (10) enthaltenen Polymermaterials 100°C bis 300°C, vorzugsweise 150°C bis 250°C, bevorzugter 180°C bis 220°C beträgt;
(5) eine Temperatur der thermischen Zersetzung des in der Polymermaterial-Basisschicht (10) enthaltenen Polymermaterials, 250 °C bis 550 °C, vorzugsweise 300 °C bis 400 °C, bevorzugter 330 °C bis 370 °C beträgt;
(6) ein Gewichtsmittel des Molekulargewichts des in der Polymermaterial-Basisschicht (10) enthaltenen Polymermaterials 10.000 bis 2.000.000, vorzugsweise 100.000 bis 1.000.000 beträgt.

4. Lithium-Metall-Batterie (5) nach einem der Ansprüche 1 bis 3, wobei die Polymermaterial-Basisschicht (10) einen oder mehrere Stoffe von Polyolefin, Polyamid, Polyimid, Polyester, Polycarbonat und Copolymeren der obigen Substanzen umfasst, vorzugsweise einen oder mehrere Stoffe von Polyethylen, Polypropylen, Polystyrol, Polyvinylchlorid, Polytetrafluorethylen, Polyamid, Polyimid, Polycarbonat, Polyethylenterephthalat, Polybutylenterephthalat, Polyethylennaphthalat, Polybutylennaphthalat und Copolymeren der obigen Substanzen umfasst.

5. Lithium-Metall-Batterie (5) nach einem der Ansprüche 1 bis 4, wobei
die Lithium-basierte Metallschicht (20) einen oder mehrere Stoffe von Metalllithium und Lithiumlegierung umfasst, und die Lithiumlegierung vorzugsweise einen oder mehrere Stoffe von Lithium-Indium-Legierung, Lithium-Zink-Legierung, Lithium-Magnesium-Legierung, Lithium-ZinnLegierung und Lithium-Silber-Legierung umfasst; und/oder,
die Lithium-basierte Metallschicht (20) eine Lithiumschicht und eine Schicht aus unähnlichem Metall umfasst, die miteinander laminiert sind, die Schicht aus unähnlichem Metall in Kontakt mit der Polymermaterial-Basisschicht steht und die Schicht aus unähnlichem Metall eines oder mehrere von Indium, Zink, Magnesium, Zinn und Silber umfasst.

6. Lithium-Metall-Batterie (5) nach einem der Ansprüche 1 bis 5, wobei die negative Elektrodenplatte ferner eine oder mehrere der folgenden Bedingungen (1) bis (5) erfüllt:
(1) die negative Elektrodenplatte einen Schichtwiderstand von ≤ 100 mΩ/□, vorzugsweise von ≤ 50 mΩ/□ aufweist;
(2) die negative Elektrodenplatte eine Durchstoßfestigkeit von ≥ 0,6 kN/mm, vorzugsweise von 1 kN/mm bis 10 kN/mm aufweist;
(3) die Zugfestigkeit der negativen Elektrodenplatte 70 MPa bis 500 MPa, vorzugsweise 220 MPa bis 500 MPa beträgt;
(4) die negative Elektrodenplatte eine Bruchdehnung von ≥0,5 %, vorzugsweise von ≥1 %, bevorzugter von ≥1,6 % aufweist;
(5) eine Schälfestigkeit zwischen der Polymermaterial-Basisschicht (10) und der Lithium-basierten Metallschicht (20) ≥ 10 N/m, vorzugsweise ≥ 20 N/m ist.

7. Lithium-Metall-Batterie (5) nach einem der Ansprüche 1 bis 6, wobei die Lithium-Metall-Batterie (5) eine All-Solid-State-Batterie oder eine Semi-Solid-State-Batterie ist, die Lithium-Metall-Batterie (5) ferner eine Festelektrolytmembran umfasst, die in Kontakt mit der Lithium-basierten Metallschicht der negativen Elektrodenplatte angeordnet ist, und die Festelektrolytmembran den Elektrolyten umfasst; vorzugsweise die Festelektrolytmembran einer oder mehrere Stoffe ist, die aus einer Festpolymer-Elektrolytmembran und einer anorganisch-organischen Verbund-Festelektrolytmembran ausgewählt ist.

8. Verfahren zum Herstellen der Lithium-Metall-Batterie (5) nach einem der Ansprüche 1-7, umfassend den Schritt des Laminierens eines Polymermaterial-Substrats und eines Lithium-basierten Metallblechs, um eine negative Elektrodenplatte herzustellen, wobei das Lithium-basierte Metallblech direkt mit beiden Oberflächen des Polymermaterial-Substrats verbunden ist.

9. Verfahren nach Anspruch 8, wobei der Laminierschritt unter Verwendung einer Presswalze durchgeführt wird, wobei die Presswalze eine Temperatur von 25°C bis 45°C, vorzugsweise von 27°C bis 35°C aufweist.

10. Vorrichtung, umfassend die Lithium-Metall-Batterie (5) nach einem der Ansprüche 1-7.

11. Negative Elektrodenplatte, umfassend:
Eine Polymermaterial-Basisschicht (10); und
eine Lithium-basierte Metallschicht (20), die direkt mit beiden Oberflächen der Polymermaterial-Basisschicht (10) verbunden ist.

## Revendications

1. Batterie au lithium métal (5), comprenant : une plaque d'électrode positive, une plaque d'électrode négative et un électrolyte, la plaque d'électrode positive comprenant un collecteur de courant d'électrode positive et une couche de matériau actif d'électrode positive disposée sur au moins une surface du collecteur de courant d'électrode positive et comprenant un matériau actif d'électrode positive, dans laquelle la plaque d'électrode négative comprend
une couche de base de matériau polymère (10) ; et
une couche métallique à base de lithium (20) qui est directement liée à deux surfaces de la couche de base de matériau polymère (10).

2. Batterie au lithium métal (5) selon la revendication 1, dans laquelle,
la couche de base de matériau polymère (10) présente une épaisseur de 3 µm à 20 µm, de préférence de 5 µm to 10 µm ; et/ou,
la couche métallique à base de lithium (20) présente une épaisseur de 3 µm à 60 µm, de préférence de 3 µm to 40 µm, et de plus préférence 3 µm to 20 µm.

3. Batterie au lithium métal (5) selon l'une quelconque la revendication 1 ou 2, dans laquelle la couche de base de matériau polymère (10) satisfait un ou plusieurs des éléments (1) à (6) suivants :
(1) la couche de base de matériau polymère (10) présente une résistance à la traction de 50 MPa à 500 MPa, de préférence de 200 MPa à 500 MPa ;
(2) la couche de base de matériau polymère (10) présente une résistance à la perforation ≥ 1 kN/mm, de préférence de 2 kN/mm à 50 kN/mm ;
(3) la couche de base de matériau polymère (10) présente un allongement à la rupture ≥ 0,5%, de préférence ≥ 1%, et de plus préférence ≥ 1,6% ;
(4) un point de fusion du matériau polymère contenu dans la couche de base de matériau polymère (10) est de 100°C à 300°C, de préférence de 150°C à 250°C, et de plus préférence de 180°C à 220°C ;
(5) une température de décomposition thermique du matériau polymère contenu dans la couche de base de matériau polymère (10) est de 250°C à 550°C, de préférence de 300°C à 400°C, et de plus préférence de 330°C à 370°C ;
(6) un poids moléculaire moyen en poids du matériau polymère contenu dans la couche de base de matériau polymère (10) est de 10 000 à 2 000 000, de préférence de 100 000 à 1 000 000.

4. Batterie au lithium métal (5) selon l'une quelconque des revendications 1 à 3, dans laquelle la couche de base de matériau polymère (10) comprend une ou plusieurs parmi une polyoléfine, un polyamide, un polyimide, un polyester, un polycarbonate et leurs copolymères, comprend de préférence un ou plusieurs parmi le polyéthylène, le polypropylène, le polystyrène, le polychlorure de vinyle, le polytétrafluoroéthylène, le polyamide, le polyimide, le polycarbonate, le polyéthylène téréphtalate, le polybutylène téréphtalate, le naphtalate de polyéthylène, le naphtalate de polybutylène et leurs copolymères.

5. Batterie au lithium métal (5) selon l'une quelconque des revendications 1 à 4, dans laquelle,
la couche métallique à base de lithium (20) comprend un ou plusieurs du lithium métallique et d'un alliage de lithium, et l'alliage de lithium comprend de préférence un ou plusieurs parmi un alliage de lithium-indium, un alliage de lithium-zinc, un alliage de lithium-magnésium, un alliage de lithium-étain et un alliage de lithium -argent ; et/ou,
la couche métallique à base de lithium (20) comprend une couche de lithium et une couche métallique dissemblable qui sont stratifiées l'une avec l'autre, la couche métallique dissemblable est en contact avec la couche de base de matériau polymère et la couche métallique dissemblable comprend une ou plusieurs parmi l'indium, le zinc, le magnésium, l'étain et l'argent.

6. Batterie au lithium métal (5) selon l'une quelconque des revendications 1 à 5, dans laquelle la plaque d'électrode négative satisfait un ou plusieurs des éléments (1) à (5) suivants :
(1) la plaque d'électrode négative présente une résistance de feuille ≤ 100 mΩ/□, de préférence ≤ 50 mΩ/□ ;
(2) la plaque d'électrode négative présente une résistance à la perforation ≥ 0,6 kN/mm, de préférence de 1 kN/mm à 10 kN/mm ;
(3) la plaque d'électrode négative présente une résistance à la traction de 70 MPa à 500 MPa, de préférence de 220 MPa à 500 MPa ;
(4) la plaque d'électrode négative présente un allongement à la rupture ≥ 0,5%, de préférence ≥ 1%, et de plus préférence ≥ 1,6% ;
(5) une résistance au pelage entre la couche de base de matériau polymère (10) et la couche métallique à base de lithium (20) est ≥ 10 N/m, de préférence ≥ 20 N/m.

7. Batterie au lithium métal (5) selon l'une quelconque des revendications 1 à 6, dans laquelle la batterie au lithium métal (5) est une batterie à état toute solide ou une batterie à état semi-solide, la batterie au lithium métal (5) comprend en outre une membrane électrolytique solide disposée en contact avec la couche métallique à base de lithium de la plaque d'électrode négative, et la membrane d'électrolyte solide comprend l'électrolyte ; de préférence, la membrane électrolytique solide est une ou plusieurs sélectionnée parmi une membranes d'électrolyte polymère solide et une membrane d'électrolyte solide composite inorganique-organique.

8. Procédé de préparation de la batterie au lithium métal (5) selon l'une quelconque des revendications 1 à 7, comprenant l'étape de laminage d'un substrat de matériau polymère et une feuille de métal à base de lithium pour préparer une plaque d'électrode négative, dans lequel la feuille de métal à base de lithium est directement liée à deux surfaces du substrat de matériau polymère.

9. Procédé de préparation selon la revendication 8, dans lequel l'étape de laminage est effectué avec un rouleau de pressage, le rouleau de pressage ayant une température de 25°C à 45°C, de préférence de 27°C à 35°C.

10. Dispositif comprenant la batterie au lithium métal (5) selon l'une quelconque des revendications 1 à 7.

11. Plaque d'électrode négative, comprenant :
une couche de base de matériau polymère (10) ; et
une couche métallique à base de lithium (20) qui est directement liée à deux surfaces de la couche de base de matériau polymère (10).
